# EUROPEAN PATENT SPECIFICATION

(11) **EP 2 533 410 B1**
(45) Date of publication and mention of the grant of the patent: **30.12.2020**
(21) Application number: 12171090.9
(22) Date of filing: 06.06.2012
(51) Int. Cl.: H02M 5/04

(54) **High yield AC - AC power converter and method therefor**
Hocheffizienter Wechselstromwandler und Verfahren dafür
Convertisseur de puissance CA/CA à haut rendement et procédé associé

(30) Priority: 08.06.2011 US 201113156254
(43) Date of publication of application: 12.12.2012
(73) Proprietor: The Boeing Company, Chicago, IL 60606-1596 (US)
(72) Inventor: Carralero, Michael A., Huntington Beach, CA 92649 (US); Quiambao, Jimmy M, Walnut, CA 91789 (US)
(74) Representative: Boult Wade Tennant LLP

(56) References cited:
- CN-A- 101 626 163
- US-A- 5 018 058
- US-A- 5 367 448
- US-A1- 2004 066 663
- US-A1- 2010 157 638
- US-A1- 2010 201 197
- US-A1- 2011 006 744

## Description

### BACKGROUND

Embodiments of this disclosure relate generally to power converters, and more particularly, to an Alternating Current (AC) to AC power converter that does not require a Direct Current (DC) link or storage devices.

Wind turbines and flywheels are types of renewable energy devices that output variable frequency, variable voltage, AC electric power. Therefore, power converters may be used to convert the variable-frequency, variable-voltage, AC electric power to fixed-frequency, fixed-voltage, AC power.

Wind turbine power systems spend a lot of time operating at light loads or fractions of their rated power capacities. These variable frequency drives typically employ dc voltage or current links for power distribution between the input and output converters and as a means to temporarily store energy. Thus, conventional power converters convert the generated AC power to DC power then to the required AC power. Unfortunately, this method renders a low yield conversion. Standard, state-of-the-art, power converters are designed to operate most efficiently at full power all, or nearly all, of the time. Therefore, when wind turbine-driven generators are operating in low wind, light load, conditions, standard power converters are inefficient.

Therefore, it would be desirable to provide a system and method that overcomes the above problems.

US Patent No. 5,018,058, in accordance with its abstract, states a voltage control apparatus that produces distortionless, stabilized alternating output voltage subject to distortion. The apparatus comprises a wave form reshaping circuit connected to the voltage output for energizing a load, and an internal reference voltage generator amplitude stabilized and synchronized with the input voltage. An error detector generates error pulses which are applied to a controller to generate control pulses. The control pulses are combined with the amplified reshaped input voltage to produce the stabilized, distortionless voltage output. An overcurrent sensor applies signals to the controller to cut off the voltage output when the load draws excessive current. The reference voltage generator can be adjustable to vary the amplitude of the alternating voltage output

US Patent No. 2010/0201197, in accordance with its abstract, states a system for combining electrical power from two or more power sources includes first and second conversion stages which receive input power from two or more power sources, and produce different output voltages, including DC outputs. The input power sources may have different voltage, frequency, and phase characteristics, and may be DC voltages. Various examples are disclosed for converting and combining the input power sources to provide at least a DC output voltage and an optional AC output voltage which may have different voltage, frequency, and phase characteristics than the input power sources. In another example, a method of power conversion is disclosed

US Patent No. 2004/0066663, in accordance with its abstract, states a battery charger including line-level input rectification, a high-frequency oscillator-controlled chopper circuit, multiple transformers operating in parallel, and controlled output rectification. Use of line-level input rectification reorders the elements of the battery charger compared to previous designs. A chopper frequency several orders of magnitude higher than that of the AC power mains is used. The use of multiple, parallel-wired transformers for voltage and current transformation eases constraints on the physical geometry of a manufactured battery charger product by permitting individual transformers, each smaller than a comparable single transformer, to be employed. Controlled output rectifiers permit power levels to be regulated dynamically.

CN Patent No. 101,626,163 relates to a hybrid wind power generation system comprising a wind wheel, wherein the wind wheel is connected with the input end of a gearbox with low speed increasing ratio; the output end of the gearbox with low speed increasing ratio is connected with a winding doubly-fed induction generator by a coupling; a rotor winding of the winding doubly-fed induction generator is connected with one end of a rotor current converter; a stator winding of the winding doubly-fed induction generator is connected with one end of a stator AC-DC-AC converter; the rotor current converter and the other end of the stator AC-DC-AC converter are connected into a power grid. The system transmits wind power to the power grid by AC-DC-AC conversion, has mature and reliable technology and can be widely applied in the power generation process of converting the wind power into power energy.

US 5 367 448 A, in accordance with its abstract, states a three phase AC to DC converter has an AC driven regulated current source, and is provided with an unregulated current controller inverter. The zero crossing of the AC voltage input is monitored by a feedback control signal to a switching controller which is coupled to the current control switches of the regulated current source. In addition, the inverter is unregulated and current fed or controlled, and it is coupled to a high frequency current sensor in the preferred form of a current transformer, for sensing current flowing into the converter and which forms part of a control circuit for controlling the switching of the three phase AC regulated current source inputs for drawing currents. The unregulated current controlled inverter has an H bridge with series connected switches and a first diode and a second diode and a fifth switch in order not to dissipate energy. The first diode is series connected to the fifth switch and in series with the second diode, and the series combination is connected in parallel with the inverter legs. In addition, a recirculation inductor and the second diode are connected in parallel with the legs of the inverter, and the second diode is poled to permit circulating current in the recirculation inductor. A capacitor, and the first diode are series connected, and the series combination connected in parallel with the first and second legs of the inverter. The diode is poled to provide current to the capacitor at the beginning of each inverter switching cycle. The fifth switch connected between the junction of the capacitor and the first diode and the junction between the second diode and second inductor permits discharging the capacitor without power dissipation during inverter operation.

US 2010/157638, in accordance with its abstract, states a power conversion system that includes a controller to provide power control to a converter, and a distortion mitigation circuit. In another example, a system includes a converter to transfer power between a power source and a load having fluctuating power demand, and a controller to provide power control, where the controller may selectively disable the power control. In another example, a power conversion system includes a controller to generate a drive signal to provide power control to a power path in response to a sense signal from the power path, where the sense signal is taken from other than the input of the power path, or the drive signal is applied to the power path at other than a first power stage.

### SUMMARY

There is described herein an AC to AC power converter comprising a rectifier configured to receive an AC signal source and to convert the AC signal source into a full wave rectified signal, an H-Bridge coupled to the rectifier, and a processor coupled to the rectifier and to the H-Bridge, wherein the processor is configured to sample the output of the rectifier to determine the frequency of the full wave rectified signal. The processor is further configured: (a) if the determined frequency is greater than a predefined value, to produce a pulse for use in pulse density modulation to modulate a rectified DC input from the rectifier to the H-Bridge; and (b) if the determined frequency is less than the predefined value, to produce a square wave signal for use by a pulse width carrier modulator to generate ramp signals for use in a pulse width modulation scheme for modulation of the output of the rectifier. The AC to AC power converter further comprises a wave filter coupled to the H-Bridge configured to modulate an output of the H-Bridge to an AC voltage of a desired frequency, and wherein an output of the wave filter is coupled to the processor.

There is also described herein a method for converting AC power to AC power, comprising: (a) receiving an input AC signal; (b) converting, using a rectifier, the input AC signal into a full wave rectified signal; (c) sending the full wave rectified signal to an H-Bridge; (d) filtering an output signal of the H-Bridge to an AC voltage signal of a desired frequency; (e) sampling the full wave rectified signal to determine a frequency of the full wave rectified signal; (f) if the determined frequency is greater than a predefined value, producing a pulse for use in pulse density modulation to modulate the full wave rectified signal input from the rectifier to the H-bridge; and (g) if the determined frequency is less than the predefined value, producing a square wave signal for use by a pulse width carrier modulator to generate ramp signals for use in a pulse width modulation scheme for modulation of the output of the rectifier.

In one example useful for understanding the disclosed embodiments, an AC to AC power converter may have a rectifier configured to receive an AC signal. An H-Bridge may be coupled to the rectifier. A processor may be coupled to the rectifier and to the H-Bridge, wherein the processor may be configured to produce a pulse to modulate a rectified DC input to the H-Bridge. A wave filter may be coupled to the H-Bridge and configured to modulate an output of the H-Bridge to an AC voltage of a desired frequency, wherein an output of the wave filter may be coupled to the processor.

In another example useful for understanding the disclosed embodiments, an AC to AC power converter may have a rectifier configured to receive an AC signal. An H-Bridge may be coupled to the rectifier. A DC filter may be coupled to the rectifier and the H-Bridge. A processor may be coupled to the rectifier and to the H-Bridge, wherein the processor is configured to produce a pulse to modulate a rectified DC input to the H-Bridge. An H-Bridge driver may be coupled to the H-Bridge and the processor. A sine wave filter may be coupled to the H-Bridge and configured to modulate an output of the H-Bridge to an AC voltage of a desired frequency, wherein an output of the wave filter may be coupled to the processor.

In another example useful for understanding the disclosed embodiments, a method for converting AC power may include receiving an input AC signal, converting the input AC signal into a full wave rectified signal, producing a pulse to modulate the full wave rectified signal, sending the modulated full wave rectified signal to an H-Bridge, filtering an output signal of the H-Bridge to an AC voltage signal of a desired frequency.

### BRIEF DESCRIPTION OF THE DRAWINGS

Embodiments of the disclosure will become more fully understood from the detailed description and the accompanying drawings, wherein:
**Figure 1** is a simplified block diagram of a high yield AC-AC Power conversion system;
**Figure 2** is a diagram showing the power conversion output of the system of **Figure 1****;**
**Figure 3** is a flow chart showing operation of a processor used in **Figure 1****;**
**Figure 4** is a simplified block diagram of a Pulse Density Modulator (PDM) control signal generator used in **Figure 3****;**
**Figure 5A** depicts transient state PWM scheme to achieve direct AC-AC high efficient power conversion; and
**Figure 5B** depicts a steady state modulation scheme PWM scheme to achieve direct AC-AC high efficient power conversion.

### DETAILED DESCRIPTION

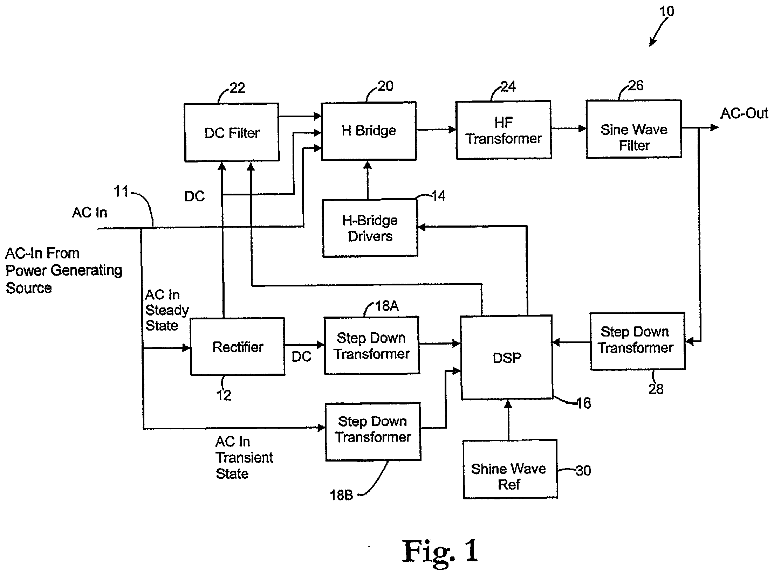

Referring to **Figure 1****,** an AC-to-AC power conversion system **10** (hereinafter system **10**) is shown. The system **10** may provide direct AC-AC power conversion without a DC link or storage devices that produces a high efficiency conversion. The system **10** may convert variable-frequency, variable-voltage, AC electric power to fixed-frequency, fixed-voltage, AC power.

The system **10** may receive an AC input (**AC-In**) via signal line 11. The AC input **AC-In** may be variable-frequency, variable-voltage, AC signal. The AC input **AC-In** may be a signal generated by a wind turbine, a flywheel or the like. The above is given as an example and should not be seen in a limiting manner. During steady state operation, the AC input **AC-In** may be sent to an input power rectifier **12** (hereinafter rectifier **12**). The rectifier **12** may be used to convert the AC input **AC-In** into a full wave rectified signal to one of constant polarity at its output. This may be done to extract a frequency content of the AC input **AC-In** for processing by a processor **16.** In the embodiment shown in **Figure 1****,** the processor **16** is a Digital Signal Processor (DSP). However, this should not be seen in a limiting manner.

The rectified signal from the rectifier **12** may have a peak voltage that is not compatible with the processor **16.** Therefore, a step down transformer **18A** may be used to lower the voltage level of the rectified signal to one compatible with the processor **16.**

The processor **16** may be used to produce a pulse to modulate the rectified signal from the rectifier **12** or the constant DC voltage(s) **DC** from the DC Filter **22** to an H-Bridge component **20.** A device driver **14** may be used to allow the processor **16** to interact with the H-Bridge component **20.** The device **14** may be a driver circuit or the like.

As shown in **Figure 1****,** the rectified DC signal **DC** may also be sent to a DC filter **22.** The rectified DC signal **DC** may not be a steady signal. Thus, a DC filter **22** may be used to smooth the rectified DC signal **DC** to the H-Bridge component **20.** The H-Bridge component **20** may enable a voltage to be applied across an output **AC-Out** in either direction.

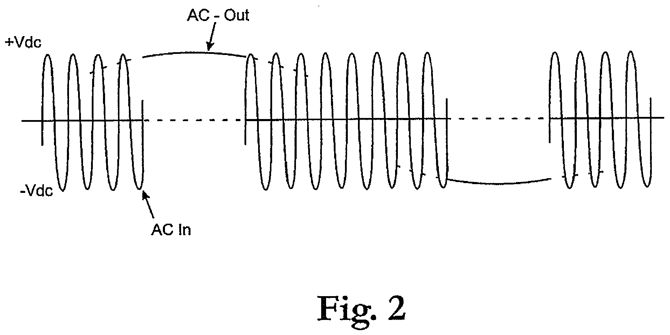

The output signal of the H-Bridge component **20** may be sent to a transformer **24.** The transformer **24** maybe used to step down or to step up the peak voltages of the output of the H-Bridge component **20** to desired levels. The output of the transformer **24** may pass through a filter **26.** The filter **26** may be used to produce a clean AC signal at the output **AC-Out (See** **Figure 2).** Figure 2 shows the output signal AC-Out from the system 10 for a specific input single AC-In on signal line **11.** The filter **26** may be used to average the modulated voltages into an AC voltage signal of a desired frequency. In the embodiment of **Figure 1****,** the filter **26** is, for example, a 60Hz Sine Wave Filter. The filter **26** is a low pass filter that averages the modulated voltages into, for example, a 60 Hz AC voltage signal at the output **AC-Out.** The filter **26** may also be used to removes transients and noise at the output. The filter **26** makes sure that the system **10** is stable at varying loads.

A feedback loop may be needed to control the AC voltage signal at the output **AC-Out.** Thus, the AC voltage signal at the output **AC-Out** may be sent back to the processor **16.** Since the AC voltage signal at the output **AC-Out** may have a peak voltage that is not compatible with the processor **16,** a step down transformer **28** may be used to lower the voltage level to one compatible with the processor **16.**

A reference sine wave generator **30** may send an output to the processor **16.** The processor **16** may compare the frequency of the AC voltage signal at the output **AC-Out** to the output of the reference sine wave generator **30.** The reference sine wave generator **30** may have a value of 60Hz. The processor **16** may then adjust the pulse signal used to modulate the rectified DC input to the H-Bridge component **20** and thus adjust the frequency of the AC voltage signal at the output **AC-Out.**

The processor **16** may be used to stabilize the AC voltage signal at the output **AC-Out** for the **AC-In** signal which may be at varying frequencies. The processor **16** operates differently for transient inputs (TS) and for steady state and low frequency inputs (SS), i.e. less than 1 KHz.

The TS AC conversion may be used to convert the transient or the first few cycles of the **AC-In** signal into the AC voltage signal of the desired frequency (for example, 60-Hz in the embodiment shown in **Figure 1**). The **AC-In** signal may be sent to a step-down signal transformer **18B** to interface the signal to the processor **16.** The processor **16** may sample the signal and determines its periodic cycles. If the frequency is 1 KHz or above, for example, the processor **16** may derive a control signal to be used for carrier generation. The processor **16** may derive the density of full wave cycles or the rectified signal from the rectifier **12** to generate the desired output sine wave voltage. The processor **16** may utilizes the feedback from the AC voltage signal at the output **AC-Out** to add or subtract the density of the full wave cycles. Also, the processor **16** may sends a control signal to the filter **26** to select the ac-ac output topology.

In the low frequency AC conversion, the **AC-In** signal may be a full wave rectified signal with plus/minus voltage V. The filter **22** may be used to produce constant DC voltages **DC** at the input of the H-Bridge component **20.** The output of the rectifier **12** may be connected to a step-down signal transformer **18** to make the signal available to the processor **16.** The processor **16** may sample the signal and determines its frequency. If the frequency is less than 1 KHz, for example) or if the rectifier is generating the +Vdc (SS), the processor **16** may derive a square wave signal for carrier generation. Also, the processor **16** may send a control signal to the filter 26 to select the ac-ac output topology to compensate for the input peak signal attenuation.

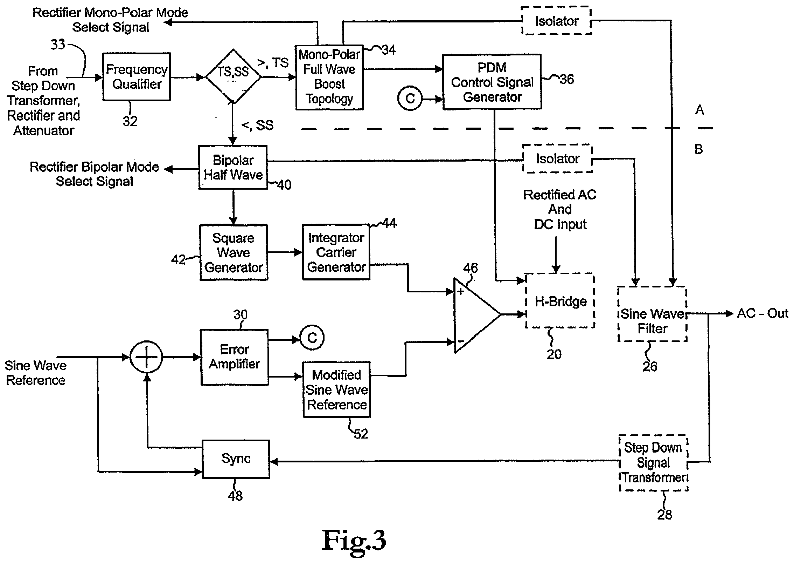

Referring now to **Figure 3****,** operation of the processor **16** can be described. The upper portion **A** depicted operation during the TS AC conversion process. The lower portion **B** depicts operation during the SS AC conversion process.

A frequency qualifier **32** may be used to determine the frequency of the signal **33** from the step-down signal transformer **18.** If the frequency of the signal from the step-down signal transformer **18** is greater than 1 KHz, for example, the signal may be sent to a boost topology **34.** The boost topology **34** may be used to increase the voltage level of the signal at the output of the H-Bridge to a desired application. The signal may then be sent to a Pulse Density Modulator (PDM) generator **36.**

The PDM generator **36** may be used to produce a pulse to modulate the rectified DC signal to the H-bridge **20** to generate the desired AC voltage signal at the output **AC-Out.** The PDM generator **36** may utilized a DSP processor to estimate the periodic cycle of the input to generate the clocking of the input through the H-Bridge AC interface. The output of a control clock may be continually synchronized with each input cycle. The DSP of the PDM generator **36** may use an adaptive PDM algorithm to adjust the pulse frequency of the control clock from the estimated amplitude, phase, and frequency of the referenced sine wave. The PDM generator **36** may have a feedback loop from the output **AC-Out** to add or subtract the density of the full wave cycles.

If the input frequency of the signal from the step-down signal transformer **18** is less than 1 KHz, for example, a square wave signal may be produced for carrier generation. In **Figure 3****,** a signal from a bipolar half wave unit **40** may be sent to a square wave generator **42.** An output of the square wave generator **42** may be coupled to an integrator carrier generator **44.** The integrator carrier generator **44** may be the pulse width carrier modulator. At high frequencies input signals **AC-In** (i.e., greater than 1KHz), the integrated signal may be a continuation of pulses to control the number of AC cycles that generates the desired AC voltage signal at the output **AC-Out.** At low frequency input signals **AC-In,** the integrated signal may be a continuation of ramp signals that may be used to modulate the output of the DC rectifier to generate the desired AC voltage signal at the output **AC-Out.** An output of the integrator carrier generator **44** may be sent to a comparator **46.** The signal from the integrator carrier generator **44** is used as a reference for the comparator **46** to control the signal at the output **AC-Out.**

A feedback loop may be formed back to the comparator **46.** An output of the step down transformer **28** may be sent to a synchronizer **48.** The synchronizer **48** may be used to synchronize the output of the step down transformer **28** with the sine wave reference signal. An error amplifier **50** may be used to generate the difference between the sine wave reference signal and the signal at the output **AC-Out.** A modified sine wave reference signal generator **52** may be used to generate a modified 60Hz reference signal, for example, which is sent to the comparator **46.** Thus, if the amplitude of the signal at the output **AC-Out** is lower, the error generated may be positive to increase the output peak until it is equal or greater than the reference. If the signal at the output **AC-Out** is greater, then the error generated may be negative to lower the amplitude of the signal at the output **AC-Out** until it is equal or lower than the example 60Hz reference. Thus, the system 10 may provide a stabilized signal at the output **AC-Out** that may be equal to, for example, the 60Hz reference.

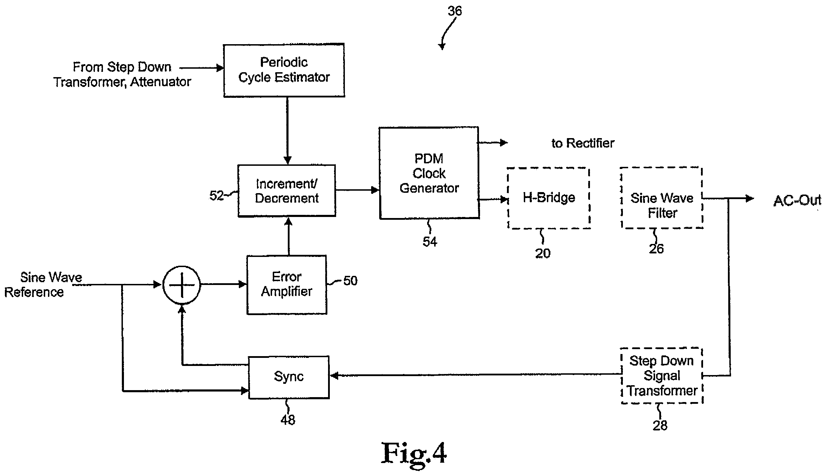

Referring now to **Figure 4****,** an example of a block diagram of the PDM control signal generator **36** is shown. The output of the error amplifier **50** may be the error between the example 60Hz Reference source and the signal at the output **AC-Out.** The output of the error amplifier **50** may be sent to a calibrating device **52** to adjust the signal at the output **AC-Out.** The PDM clock generator **54** may be used to clock the periodic input voltages through the H-Bridge **20** to generate the desired signal at the output **AC-Out.** The inverse of the clocks may be used to generate the SS rectified dc voltage. When the rectified DC voltage reaches steady-state; the system **10** transfers the mode of operation from TS to SS mode.

The system **10** may provide direct AC-AC power conversion without a DC link or storage devices that produces a high efficiency conversion. The system **10** may provide a direct AC-AC power conversion principle that leads to the distinct conversion system with no dc-link energy storage components. This direct AC-AC conversion may be achieved by schemes that use pulse density modulation.

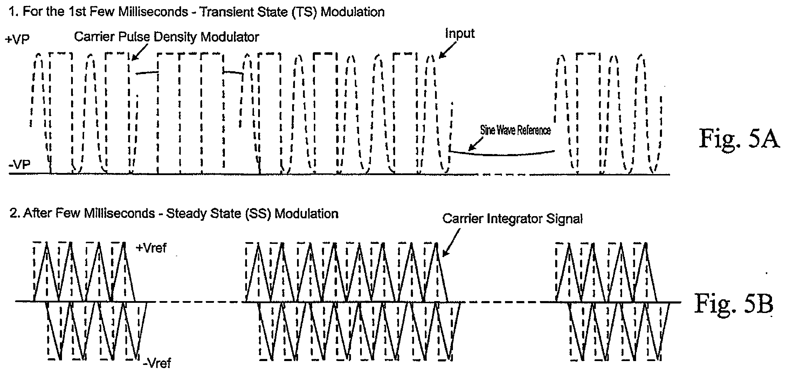

Referring now to **Figure 5****,** two modulation schemes may be utilized. In a High Speed Modulation, for the 1st few milliseconds after null, the carrier signal may be derived from the periodic cycling of the input signal **AC-In.** Each cycle may be sampled by the processor **16** (**Figure 1**) to supply the required energy to transform the input periodic cycle into the desired frequency at the output **AC-Out** (for example, 60-Hz as shown in **Figure 5****).** This may be necessary for high speed modulation to null the effects of the RC time constant of the DC filter **22.** As shown in **Figure 5****,** the modulating signal may be synchronized with the input signal **AC-In** and the continuation of pulses to estimate a 60-Hz, ac output for example. The efficiency of this modulation scheme may be a function of the input frequency; the higher the frequency, the higher the efficiency of the ac-ac conversion. Also, the null cycles of the modulated signal may be used to clock the rest of the ac input cycles to the rectifier **12** (**Figure 1**).

In Steady-State Modulation (**Figure 5b**), after a few milliseconds when the Vdc has stabilized, traditional PWM scheme may be implemented. The PWM scheme may utilize a voltage DC link to convert the AC output. This method may be used to maximize power efficiency by storing the input energy in the form of DC voltage conversion.

While embodiments of the disclosure have been described in terms of various specific embodiments, those skilled in the art will recognize that the embodiments of the disclosure can be practiced with modifications within the scope of the claims.

Nonetheless, for the avoidance of doubt, please note that the scope of protection is to be defined by the appended claims.

## Claims

1. An AC to AC power converter comprising:
a rectifier (12) configured to receive an AC signal source (11) and to convert the AC signal source into a full wave rectified signal;
an H-Bridge (20) coupled to the rectifier;
a processor (16) coupled to the rectifier (12) and to the H-Bridge, **characterized in that** the processor (16) is configured to sample the output of the rectifier to determine the frequency of the full wave rectified signal, wherein the processor is further configured:
(a) if the determined frequency is greater than a predefined value, to produce a pulse for use in pulse density modulation to modulate a rectified DC input from the rectifier to the H-Bridge; and
(b) if the determined frequency is less than the predefined value, to produce a square wave signal for use by a pulse width carrier modulator to generate ramp signals for use in a pulse width modulation scheme for modulation of the output of the rectifier;
a wave filter (26) coupled to the H-Bridge (20) configured to modulate an output of the H-Bridge to an AC voltage of a desired frequency; and
wherein an output of the wave filter is coupled to the processor (16).

2. An AC to AC power converter in accordance with Claim 1, further comprising a DC filter coupled to the rectifier to receive the full wave rectified signal from the rectifier and coupled to the H-Bridge to provide a smoothed rectified DC signal to the H-bridge.

3. An AC to AC power converter in accordance with Claim 1 or Claim 2, further comprising a high frequency transformer coupled to the H-bridge to receive an output of the H-bridge and coupled to the wave filter to provide an input to the wave filter.

4. An AC to AC power converter in accordance with any of the preceding claims, further comprising an H-Bridge driver coupled to the H-Bridge and the processor and allowing the processor to interact with the H-Bridge.

5. An AC to AC power converter in accordance with any of the preceding claims, further comprising a first step down transformer coupled to the rectifier to receive the full wave rectified signal and coupled to the processor to provide a signal to the processor.

6. An AC to AC power converter in accordance with any of the preceding claims, further comprising a second step down transformer coupled to the wave filter to receive an output of the wave filter and coupled to the processor to provide a signal to the processor.

7. An AC to AC power converter in accordance with any of the preceding claims, further comprising a reference wave signal coupled to the processor.

8. An AC to AC power converter in accordance with any of the preceding claims, wherein the wave filter is a 60Hz Sine wave filter.

9. A method for converting AC power to AC power, comprising:
receiving an input AC signal;
converting, using a rectifier, the input AC signal into a full wave rectified signal;
sending the full wave rectified signal to an H-Bridge;
filtering an output signal of the H-Bridge to an AC voltage signal of a desired frequency; the method being further **characterized by**
sampling the full wave rectified signal to determine a frequency of the full wave rectified signal;
if the determined frequency is greater than a predefined value, producing a pulse for use in pulse density modulation to modulate the full wave rectified signal input from the rectifier to the H-bridge;
if the determined frequency is less than the predefined value, producing a square wave signal for use by a pulse width carrier modulator to generate ramp signals for use in a pulse width modulation scheme for modulation of the output of the rectifier.

10. The method of Claim 9, further comprising sending the modulated full wave rectified signal to a DC Filter.

11. The method of Claim 10, further comprising stepping down a frequency of the output signal of the H-Bridge to said desired frequency.

12. The method of any of Claims 9 through 11, further comprising stepping down a voltage of the full wave rectified signal to form a carrier reference signal for a processor unit.

13. The method of any of Claims 9 through 12, wherein receiving the input AC signal further comprises receiving the input AC signal from a power generating device.

14. The method of any of Claims 11 through 13, wherein receiving the input AC signal further comprises receiving the input AC signal from a power generating device, the input AC signal being of variable frequency.

## Patentansprüche

1. Wechselstrom-Wechselstrom-Leistungswandler, umfassend:
einen Gleichrichter (12), der konfiguriert ist, um eine Wechselstrom-Signalquelle (11) zu empfangen und die Wechselstrom-Signalquelle in ein vollwellengleichgerichtetes Signal umzuwandeln;
eine H-Brücke (20), die mit dem Gleichrichter gekoppelt ist;
einen Prozessor (16), der mit dem Gleichrichter (12) und mit der H-Brücke gekoppelt ist,
**dadurch gekennzeichnet, dass** der Prozessor (16) konfiguriert ist, die Ausgabe des Gleichrichters abzutasten, um die Frequenz des vollwellengleichgerichteten Signals zu bestimmen, wobei der Prozessor ferner konfiguriert ist:
(a) wenn die bestimmte Frequenz größer als ein vordefinierter Wert ist, einen Impuls zur Verwendung bei der Impulsdichtemodulation zu erzeugen, um eine vom Gleichrichter in die H-Brücke eingespeiste gleichgerichtete Gleichspannung zu modulieren; und
(b) wenn die ermittelte Frequenz kleiner als der vordefinierte Wert ist, ein Rechtecksignal zur Verwendung durch einen Impulsbreiten-Trägermodulator zu erzeugen, um Rampensignale zur Verwendung in einem Impulsbreiten-Modulationsschema zur Modulation der Ausgabe des Gleichrichters zu erzeugen;
einen mit der H-Brücke (20) gekoppelten Wellenfilter (26), der konfiguriert ist, um eine Ausgabe der H-Brücke auf eine Wechselspannung einer gewünschten Frequenz zu modulieren; und
wobei eine Ausgabe des Wellenfilters mit dem Prozessor (16) gekoppelt ist.

2. Wechselstrom-Wechselstrom-Leistungswandler nach Anspruch 1, ferner umfassend einen Gleichstromfilter, der mit dem Gleichrichter gekoppelt ist, um das vollwellengleichgerichtete Signal von dem Gleichrichter zu empfangen, und der mit der H-Brücke gekoppelt ist, um ein geglättetes gleichgerichtetes Gleichstromsignal an die H-Brücke zu liefern.

3. Wechselstrom-Wechselstrom-Leistungswandler nach Anspruch 1 oder Anspruch 2, ferner umfassend einen Hochfrequenztransformator, der mit der H-Brücke gekoppelt ist, um eine Ausgabe der H-Brücke zu empfangen, und der mit dem Wellenfilter gekoppelt ist, um eine Eingabe für das Wellenfilter bereitzustellen.

4. Wechselstrom-Wechselstrom-Leistungswandler nach einem der vorhergehenden Ansprüche, ferner umfassend einen H-Brückentreiber, der mit der H-Brücke und dem Prozessor gekoppelt ist und es dem Prozessor ermöglicht, mit der H-Brücke zu wechselwirken.

5. Wechselstrom -Wechselstrom-Leistungswandler nach einem der vorhergehenden Ansprüche, ferner umfassend einen ersten Abwärtstransformator, der mit dem Gleichrichter gekoppelt ist, um das vollwellengleichgerichtete Signal zu empfangen, und der mit dem Prozessor gekoppelt ist, um ein Signal an den Prozessor zu liefern.

6. Wechselstrom-Wechselstrom-Leistungswandler nach einem der vorhergehenden Ansprüche, ferner umfassend einen zweiten Abwärtstransformator, der mit dem Wellenfilter gekoppelt ist, um eine Ausgabe des Wellenfilters zu empfangen, und der mit dem Prozessor gekoppelt ist, um ein Signal an den Prozessor zu liefern.

7. Wechselstrom-Wechselstrom-Leistungswandler nach einem der vorhergehenden Ansprüche, der ferner ein Referenzwellensignal umfasst, das mit dem Prozessor gekoppelt ist.

8. Wechselstrom-Wechselstrom-Leistungswandler nach einem der vorhergehenden Ansprüche, bei dem der Wellenfilter ein 60Hz-Sinuswellenfilter ist.

9. Verfahren zum Umwandeln von Wechselstromleistung in Wechselstromleistung, mit den Schritten:
Empfangen eines Eingangs-Wechselstromsignals;
Umwandeln des Eingangs-Wechselstromsignals unter Verwendung eines Gleichrichters in ein vollwellengleichgerichtetes Signal;
Senden des vollwellengleichgerichteten Signals an eine H-Brücke;
Filtern eines Ausgangssignals der H-Brücke in ein Wechselspannungssignal einer gewünschten Frequenz;
wobei das Verfahren ferner **gekennzeichnet ist durch**
Abtasten des vollwellengleichgerichteten Signals, um eine Frequenz des vollwellengleichgerichteten Signals zu bestimmen;
wenn die bestimmte Frequenz größer als ein vordefinierter Wert ist, Erzeugen eines Impulses zur Verwendung bei der Impulsdichtemodulation, um das vom Gleichrichter in die H-Brücke eingegebene vollwellengleichgerichtete Signal zu modulieren;
wenn die bestimmte Frequenz kleiner als der vordefinierte Wert ist, Erzeugen eines Rechtecksignals zur Verwendung durch einen Impulsbreiten-Trägermodulator, um Rampensignale zur Verwendung in einem Impulsbreiten-Modulationsschema zur Modulation der Ausgabe des Gleichrichters zu erzeugen.

10. Verfahren nach Anspruch 9, ferner umfassend das Senden des modulierten vollwellengleichgerichteten Signals an einen Gleichstromfilter.

11. Verfahren nach Anspruch 10, ferner umfassend das Herabsetzen einer Frequenz des Ausgangssignals der H-Brücke auf die gewünschte Frequenz.

12. Verfahren nach einem der Ansprüche 9 bis 11, ferner umfassend das Herabsetzen einer Spannung des vollwellengleichgerichteten Signals, um ein Trägerreferenzsignal für eine Prozessoreinheit zu bilden.

13. Verfahren nach einem der Ansprüche 9 bis 12, bei dem das Empfangen des Eingangs-Wechselstromsignals ferner das Empfangen des Eingangs-Wechselstromsignals von einer Energieerzeugungsvorrichtung umfasst.

14. Verfahren nach einem der Ansprüche 11 bis 13, bei dem das Empfangen des Eingangs-Wechselstromsignals ferner das Empfangen des Eingangs-Wechselstromsignals von einer Energieerzeugungsvorrichtung umfasst, wobei das Eingangs-Wechselstromsignal von variabler Frequenz ist.

## Revendications

1. Convertisseur de courant alternatif, CA, en courant alternatif comprenant :
un redresseur (12) configuré pour recevoir une source de signal CA (11) et pour convertir la source de signal CA en un signal redressé pleine onde ;
un pont en H (20) couplé au redresseur ;
un processeur (16) couplé au redresseur (12) et au pont en H, **caractérisé en ce que** le processeur (16) est configuré pour échantillonner la sortie du redresseur afin de déterminer la fréquence du signal redressé pleine onde, le processeur étant en outre configuré :
(a) si la fréquence déterminée est supérieure à une valeur prédéfinie, pour produire une impulsion à utiliser dans une modulation de densité d'impulsion afin de moduler une entrée de courant continu, CC, redressée à partir du redresseur vers le pont en H ; et
(b) si la fréquence déterminée est inférieure à la valeur prédéfinie, pour produire un signal d'onde carrée à utiliser par un modulateur de porteuse en largeur d'impulsion afin de générer des signaux en rampe à utiliser dans un schéma de modulation de largeur d'impulsion pour une modulation de la sortie du redresseur ;
un filtre à onde (26) couplé au pont en H (20) configuré pour moduler une sortie du pont en H à une tension CA d'une fréquence souhaitée ; et
dans lequel une sortie du filtre à onde est couplée au processeur (16).

2. Convertisseur de courant alternatif en courant alternatif selon la revendication 1, comprenant en outre un filtre CC couplé au redresseur pour recevoir le signal redressé pleine onde à partir du redresseur et couplé au pont en H pour fournir un signal CC redressé lissé au H-pont.

3. Convertisseur de courant alternatif en courant alternatif selon la revendication 1 ou la revendication 2, comprenant en outre un transformateur haute fréquence couplé au pont en H pour recevoir une sortie du pont en H et couplé au filtre à onde pour fournir une entrée au filtre à onde.

4. Convertisseur de courant alternatif en courant alternatif selon l'une quelconque des revendications précédentes, comprenant en outre un pilote de pont en H couplé au pont en H et au processeur et permettant au processeur d'interagir avec le pont en H.

5. Convertisseur de courant alternatif en courant alternatif selon l'une quelconque des revendications précédentes, comprenant en outre un premier transformateur abaisseur couplé au redresseur pour recevoir le signal redressé pleine onde et couplé au processeur pour fournir un signal au processeur.

6. Convertisseur de courant alternatif en courant alternatif selon l'une quelconque des revendications précédentes, comprenant en outre un second transformateur abaisseur couplé au filtre à onde pour recevoir une sortie du filtre à onde et couplé au processeur pour fournir un signal au processeur.

7. Convertisseur de courant alternatif en courant alternatif selon l'une quelconque des revendications précédentes, comprenant en outre un signal d'onde de référence couplé au processeur.

8. Convertisseur de courant alternatif en courant alternatif selon l'une quelconque des revendications précédentes, dans lequel le filtre à onde est un filtre à onde sinusoïdale de 60 Hz.

9. Procédé de conversion de courant alternatif en courant alternatif, comprenant les étapes consistant à :
recevoir un signal CA d'entrée ;
convertir, en utilisant un redresseur, le signal CA d'entrée en un signal redressé pleine onde ;
envoyer le signal redressé pleine onde à un pont en H ;
filtrer un signal de sortie du pont en H en un signal de tension CA d'une fréquence souhaitée ; le procédé étant en outre **caractérisé par** les étapes consistant à
échantillonner le signal redressé pleine onde pour déterminer une fréquence du signal redressé pleine onde ;
si la fréquence déterminée est supérieure à une valeur prédéfinie, produire une impulsion à utiliser dans une modulation de densité d'impulsion pour moduler l'entrée de signal redressé pleine onde à partir du redresseur vers le pont en H ;
si la fréquence déterminée est inférieure à la valeur prédéfinie, produire un signal d'onde carrée destiné à être utilisé par un modulateur de porteuse en largeur d'impulsion pour générer des signaux en rampe à utiliser dans un schéma de modulation en largeur d'impulsion pour une modulation de la sortie du redresseur.

10. Procédé selon la revendication 9, comprenant en outre un envoi du signal redressé pleine onde modulée vers un filtre CC.

11. Procédé selon la revendication 10, comprenant en outre u abaissement d'une fréquence du signal de sortie du pont en H à ladite fréquence souhaitée.

12. Procédé selon l'une quelconque des revendications 9 à 11, comprenant en outre un abaissement d'une tension du signal redressé pleine onde pour former un signal de référence de porteuse pour une unité de processeur.

13. Procédé selon l'une quelconque des revendications 9 à 12, dans lequel la réception du signal CA d'entrée comprend en outre une réception du signal CA d'entrée à partir d'un dispositif générateur de courant.

14. Procédé selon l'une quelconque des revendications 11 à 13, dans lequel la réception du signal CA d'entrée comprend en outre une réception du signal CA d'entrée à partir d'un dispositif générateur de courant, le signal CA d'entrée éteatant de fréquence variable.
